## Europäisches Patentamt

## European Patent Office

## Office européen des brevets

(11) Publication number: **0 117 755**
**B1**

⑱

(12) EUROPEAN PATENT SPECIFICATION

(45) Date of publication of patent specification: 02.11.88

(21) Application number: **84301275.8**

(22) Date of filing: **27.02.84**

(51) Int. Cl.⁴: **C 01 B 13/20, C 01 F 7/36,
C 01 G 23/053, C 01 G 25/02,
B 01 J 19/24**

(54) Process and apparatus for preparing metal oxide particles.

(30) Priority: **25.02.83 IT 1981983**

(43) Date of publication of application:
**05.09.84 Bulletin 84/36**

(45) Publication of the grant of the patent:
**02.11.88 Bulletin 88/44**

(84) Designated Contracting States:
**DE FR GB**

(56) References cited:
**FR-A-1 030 855
FR-A-1 546 709
FR-A-2 187 398
GB-A- 743 508
GB-A-2 070 579
US-A-4 308 241
CHEMICAL ABSTRACTS, vol. 93, no. 8, 25th
August 1980, page 576, no. 80855r, Columbus,
Ohio, US; B.J. INGEBRETHSEN et al.:
"Preparation of uniform colloidal dispersions
by chemical reactions in aerosols. 2 Spherical
particles of aluminium hydrous oxide", & J.
AEROSOL. SCI. 1980, 11(3), 217-80**

(73) Proprietor: **Montedison S.p.A.
31, Foro Buonaparte
I-20121 Milan (IT)**

(72) Inventor: **Cortesi, Paolo
47/14, via Cappuccini
Chivasso (Torino) (IT)**
Inventor: **Donati, Gianni
30, via Meda
RHO (Milano) (IT)**
Inventor: **Saggese, Giuseppe
16, via Cuneo
Novara (IT)**

(74) Representative: **Whalley, Kevin et al
MARKS & CLERK 57/60 Lincoln's Inn Fields
London WC2A 3LS (GB)**

## Description

The present invention relates to a process and an apparatus for preparing metal oxide particles, more particularly for preparing mono-dispersed, spherical, non-aggregated metal oxide particles having an average size below one micrometre. Still more particularly, the invention relates to a process and an apparatus for preparing such particles of metal oxides, in particular $TiO_2$, $Al_2O_3$, $ZrO_2$, $Cr_2O_3$, $V_2O_5$, $Ga_2O_3$ and $Fe_2O_3$, starting from metal compounds hydrolyzable to hydrated oxides by reaction with steam.

Titanium dioxide produced as spherical, submicronic, non-agglomerated and narrow-dispersed particles has a wide range of uses. Having characteristics which impart to it excellent optical pigmentary properties, the titanium dioxide is employable in electrophoretic image display, where the uniform dimensions of the particles permit fully stable colloidal suspensions to be obtained, without variations in concentration due to different sedimentation rates of the particles.

A powder of monodispersed $TiO_2$ is utilized also in the manufacture of sintered materials, particularly in the field of ceramics, as it permits reduction of the sintering temperature and time, while increasing the material mechanical strength.

Further possible utilizations are those in photography, electronics, etc., which concern also other types of metal oxides such as $Al_2O_3$ or $ZrO_2$.

Various methods of producing $TiO_2$ and other metal oxides of spherical form and with narrow granulometric distribution are known at present, for example:

—the hydrolysis of $TiCl_4$ solutions at high temperature, in the presence of $H_2SO_4$;

—the decomposition of chelated compounds in strongly saline solutions;

—the phase transformation and recrystallization of a metal oxide.

These methods have the disadvantages of low productivity and of providing agglomerated and not always spherical particles.

Spherical, submicronic, non-agglomerated $TiO_2$ particles having a narrow granulometric distribution may be obtained according to the process described in US patent No. 4,241,042. According to this process, there is formed an aerosol of a hydrolyzable liquid titanium compound in a gaseous stream with laminar flow, and this stream is reacted with steam, whereby particles of hydrated $TiO_2$ are obtained, which are then calcined. The best results are obtained, with this process, by using a solid nucleating agent as a nucleus for the condensation of the liquid particles of hydrolyzable titanium compound. It is therefore recommendable, in this process, to install a generator of solid nuclei.

The present invention aims to provide a simple process, which does not require the generation of solid nuclei, for preparing mono-dispersed, spherical, non-agglomerated metal oxide particles having sizes below one micrometre. The invention also aims to provide a process which may be easily adopted on a commercial scale, and to provide an apparatus suitable for carrying out such a process.

The present invention in one aspect provides a process for preparing spherical, submicronic, mono-dispersed and non-aggregated particles of metal oxides by reacting with steam a gaseous stream containing an aerosol of liquid particles of a hydrolyzable metal compound, wherein into a duct, in which an inert gas stream containing vapour of a hydrolyzable metal compound flows, there is fed, through a nozzle, a cold inert gas stream, the temperature and flow-rates of the two gaseous streams being such as to establish in the duct a temperature lower than the condensation temperature of the metal compound, the mixed gaseous streams having a turbulent flow in the duct, with a Reynolds number equal to or higher than 1800; and wherein at the duct outlet the aerosol of the metal compound liquid particles, which has formed in the duct, is reacted with steam, whereby there form solid particles of hydrated metal oxide, which are subsequently calcined to oxide.

The term "inert gas" means a gas which does not react with the hydrolyzable metal compound. Suitable gases are for example air and nitrogen. It is necessary for the gas to be dry in order to prevent an untimely reaction between metal compound and steam.

The inert gas stream containing the metal compound vapour is obtainable according to known methods. It is possible to form an aerosol of liquid droplets of the metal compound in the inert gas, for example by means of a two-fluid nebulizer, and to then evaporate the aerosol by heating the gas stream. It is also possible to boil under vacuum the metal compound and to entrain the vapours with a hot inert gas stream. It is preferable to form an aerosol of the metal compound in the inert gas stream, such aerosol being then evaporated before conveying the stream into the duct.

Preferably, the hydrolyzable metal compound is a Ti, Al, Zr, Cr, V, Ga or Fe compound, more preferably a compound of Ti, Al or Zr.

Among the metal compounds hydrolyzable with steam there may be particularly mentioned, for example:

—for titanium: isopropyltitanate (titanium isopropyl), titanium ethoxide and titanium tetrachloride;

—for aluminium: aluminium sec.butoxide, aluminium ter.butoxide, aluminium n-butoxide and aluminium isobutoxide;

—for zirconium: isopropylzirconate and zirconium n-propoxide.

For the other metals, similar compounds may be used.

The temperature of the cold gas stream is such, taking into account the temperature of the gas stream containing the metal compound vapour as well as the flow of the two gas streams, that the temperature in the duct is lower than the condensation temperature of the metal compound vapour. Operation is such that there exists in the duct a Reynolds number equal to or higher than 1800. In the duct the turbulence is high, even for $R_e$ values equal to or slightly higher than 1800, and the mixing of the streams, with formation of the aerosol, occurs rapidly in the duct.

The Reynolds number in the duct is usually higher than 2000. The Reynolds number may be as high as 100,000 or above; more usually the Reynolds number is not higher than about 10,000.

The choice of the temperature at which the condensation must take place in order to obtain a mono-dispersed product is critical: such temperature is to be experimentally determined for each metal compound, also as a function of its concentration in the carrying gas in the duct.

In the case of isopropyltitanate, the condensation temperature should not be higher than 100°C. Good results are obtained for example by operating from a temperature of 40°C to a temperature of 100°C. In the case of aluminium sec. butoxide and isopropyl-zirconate good results are obtained by generally operating at a temperature from 50 to 120°C. An aerosol of spherical, submicronic, mono-dispersed and non-aggregated metal compound droplets flows out from the duct; such properties of the droplets remain unaltered in the solid particles of hydrated metal oxide obtained after the hydrolysis and in the solid particles of metal oxide obtained after calcination.

Steam can be introduced as such or in a third gas stream consisting, for example, of air or nitrogen. In the latter case it is possible for example to form, by means of a nebulizer, an aerosol of water droplets in a gas stream and to successively evaporate the water by heating the stream.

Preferably the duct is an ejector and, in such case, the inert gas stream containing the hydrolyzable metal compound vapour is fed into the ejector chamber, while the cold inert gas stream is fed into the ejector nozzle. The Reynolds number values stated above refer to the convergent portion of the ejector. In the case of an ejector, mixing of the gaseous streams, with formation of the aerosol, occurs rapidly within the ejector, prevailingly or entirely in its convergent portion.

The hydrolysis temperature is not critical: it is possible to operate, for example, from 25° to 70°C. Optionally, at least the lower portion of the hydrolysis chamber may be cooled. Since the section of the hydrolysis chamber is greater than the section of the duct or of the ejector, the gas flow in the hydrolysis chamber rapidly becomes laminar (with $R_e$ ranging for example from 100 to 500). This reduces the risk of coalescence for the droplets coming from the duct or from the ejector.

Steam is preferably fed to the hydrolysis chamber in considerable excess with respect to the hydrolysis reaction stoichiometry: for example, water amounts (steam) corresponding to 1.5—12 times the stoichiometric ratio with respect to the hydrolyzable metal compound are preferably used.

The hydrolysis chamber volume, taking into account the total flowrate of the gases, is selected such that the contact time between the hydrolyzable compound particles and the steam may ensure a complete hydrolysis even inside the particles, for example the contact time may be suitably from 25 to 50 seconds.

The metal oxide particles are separable from the gas stream either before or after calcination. If the separation occurs before the calcination, it is advisable to heat the gaseous stream, e.g. to a temperature from 100 to 140°C, in order to favour the hydrolysis completion inside the already formed solid particles, and to dry them prior to separation. Separation can be accomplished for example in cyclones, on filters or by electrostatic deposition. Calcination after separation can be carried out, for example, in a static furnace; a calcination temperature suitable for obtaining $TiO_2$ anatase in a static furnace is from 540° to 580°C. If the separation occurs after the calcination, then the calcination takes place in the gaseous stream itself.

The invention in another aspect provides apparatus for the production of spherical, submicronic, mono-dispersed and non-aggregated particles of metal oxides, according to the process according to the first aspect of the invention, comprising a convergent-divergent ejector terminating in a cylindrical portion which coaxially penetrates into the curved bottom portion of a cylindrical chamber, the diameter of which is at least twice the diameter of the said cylindrical portion of the ejector, the said curved bottom portion of the cylindrical chamber being surmounted with an apertured plate, through which the end of the said cylindrical portion of the ejector coaxially passes, an ejector nozzle for receiving a cold inert gas stream feed, an ejector chamber for receiving a feed of an inert gas stream containing vapour of a hydrolyzable metal compound, and the said curved bottom portion of the said cylindrical chamber being provided with one or more openings for the inflow of steam, and downstream of the said cylindrical chamber the apparatus including a device for separating the hydrated metal oxide from the gaseous stream and a furnace for calcining the hydrated oxide to oxide.

The ratio between the diameter of the cylindrical chamber and the diameter of the cylindrical portion of the ejector is preferably from 2 to 15.

The furnace for calcining the hydrated metal oxide carried by the gaseous stream may be suitably arranged upstream of the device for separating the metal oxide from the gaseous stream.

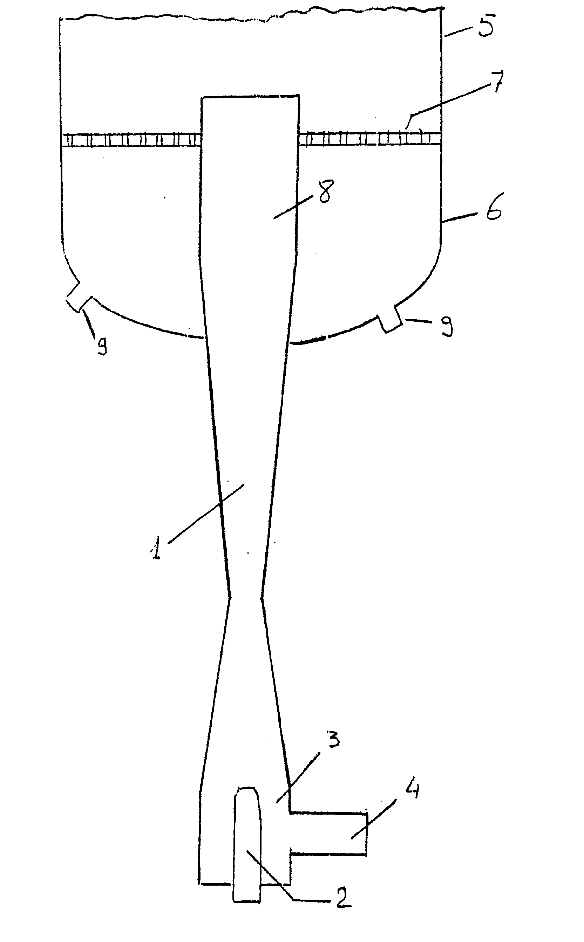

The invention will be further described, by way of example only, with reference to the accompanying drawing, which is a schematic view of the embodiment of an apparatus according to the invention.

The apparatus shown in the drawing comprises a convergent-divergent ejector 1 terminating in a cylindrical portion 8 which coaxially penetrates into a curved bottom portion 6 of a cylindrical chamber 5, the diameter of which is several times the diameter of the ejector cylindrical portion 8. The curved bottom portion 6 of the cylindrical chamber is surmounted with a drilled plate 7 through which the end of the ejector cylindrical portion 8 coaxially passes. A cold inert gas stream is fed to the ejector nozzle 2 and an inert gas stream containing hydrolyzable metal compound vapour is fed through an inlet 4 to the ejector chamber 3. The curved bottom portion 6 of the cylindrical chamber is provided with one or more holes 9 for the inflow of steam. Downstream of the cylindrical chamber the apparatus includes a conventional device (not shown in the figure) for separating the hydrated metal oxide from the gaseous stream, and a conventional furnace (not shown in the figure) for calcining the hydrated oxide to oxide.

The invention will be further described with reference to the following illustrative Examples.

Example 1

The apparatus shown in the drawing was utilized to prepare a $TiO_2$ powder. The ejector had the following characteristics: nozzle diameter=3 mm; ejector chamber diameter=14 mm; throttling diameter=5 mm; diameter of the divergent upper end portion=15 mm; length of the convergent portion=55 mm; length of the divergent portion=60 mm; length of the cylindrical portion=30 mm.

The hydrolysis chamber had an inner diameter of 90 mm and a volume of 14 litres.

Air was used as carrying gas. Isopropyltitanate was employed as titanium compound. In a dry air stream with a flowrate of 390 l/h (measured at room temperature), an isopropyltitanate aerosol was produced by means of a two-fluid nebulizer. The aerosol was then evaporated by externally heating the air stream. Before entering the ejector chamber, the stream temperature was 165°C.

A second dry air stream with a flowrate of 580 l/h (measured at room temperature) was cooled to +2°C before entering the ejector nozzle.

The temperature at which the aerosol formed in the ejector was about 65°C, while the Reynolds number in the ejector convergent portion was about 3,000.

In a third air stream with a flowrate of 705 l/h (measured at room temperature) a distilled water aerosol was produced by means of a two-fluid nebulizer. The aerosol was then evaporated by externally heating the air stream prior to its entering the hydrolysis chamber. This stream entered the apparatus at a temperature of about 120°C.

In the hydrolysis chamber, the contact time was about 30 seconds and the (moles of water)/(moles of isopropyltitanate) ratio was approximately 8.

The gaseous stream leaving the hydrolysis chamber was externally heated to about 120°C and the hydrated titanium oxide was separated in three cyclones arranged in series. The product, examined under an electron microscope, revealed the following particle size characteristics:

$D_n$ (average linear diameter): 0.82 μm

$\delta$ (standard deviation): 0.12

$\delta/D_n$ (dispersion degree): 0.15

$D_w/D_n$ (polydispersion index): 1.07.

These values and the method of determining the same are described by Edward A. Collins, John A. Davidson and Charles A. Daniels, Review of Common Methods of Particles Size Measurement, Journal of Paint Technology, vol. 47, No. 604, May 1975.

The particles were perfectly spherical, non-agglomerated and water-dispersible.

The yield was about 30%, determined on titanium (the rest having escaped the cyclones). If a more efficient separation method had been used (e.g. an absolute membrane filter), the yield would probably have been about 90%. The productivity was approximately 4 g/h of hydrated $TiO_2$.

By calcining the hydrated $TiO_2$ in a static furnace at 560°C, $TiO_2$ anatase with unchanged particle size characteristics was obtained.

Example 2

The procedure described in example 1 was followed, except for the following.

The first gaseous stream (air+isopropyltitanate) had a flowrate of 300 l/h (measured at room temperature) and a temperature of 180°C before entering the ejector.

The second stream (cold air) had a flowrate of 450 l/h (measured at room temperature) and a temperature of 21°C before entering the ejector.

The third stream (air+steam) had a flowrate of 700 l/h (measured at room temperature) and a temperature of about 120°C.

The temperature at which the aerosol formed in the ejector was about 85°C, while the Reynolds number in the ejector convergent portion was about 2,800.

The particle size characteristics of hydrated $TiO_2$ were the following:

$D_n=0.94$ μm; $\delta=0.15$; $\delta/D_n=0.16$; $D_w/D_n=1.08$.

The productivity was about 5 g/h of hydrated $TiO_2$, with a yield of 50% calculated on titanium.

Example 3

The procedure described in example 1 was followed, except for the following.

The first gaseous stream (air+isopropyltitanate) had a flowrate of 250 l/h (measured at room temperature) and a temperature of 128°C before entering the ejector.

The second stream (cold air) had a flowrate of 420 l/h (measured at room temperature) and a temperature of 22°C before entering the ejector.

The third stream (air+steam) had a flowrate of 700 l/h (measured at room temperature) and a temperature of about 120°C.

The temperature at which the aerosol formed in the ejector was about 62°C, while the Reynolds number in the ejector convergent portion was about 2,500.

The particle size characteristics of hydrated $TiO_2$ were as follows:

$D_n=0.85$ μm; $\delta=0.14$; $\delta/D_n=0.16$; $D_w/D_n=1.08$.

The productivity was about 3.5 g/h of hydrated $TiO_2$, with a yield of 20% calculated on titanium.

Example 4

The procedure described in example 1 was followed, except for the following.

The first gaseous stream (air+isopropyltitanate) had a flowrate of 300 l/h (measured at room temperature) and a temperature of 104°C before entering the ejector.

The second gaseous stream (cold air) had a flowrate of 300 l/h (measured at room temperature) and a temperature of 5°C before entering the ejector.

The third gaseous stream (air+steam) had a flow-rate of 320 l/h (measured at room temperature) and a temperature of about 120°C.

The temperature at which the aerosol formed in the ejector was about 55°C, while the Reynolds number in the ejector convergent portion was about 2,000.

The product characteristics were the following:

$D_n=0.69$ μm; $\delta=0.11$; $\delta/D_n=0.16$; $D_w/D_n=1.08$.

The productivity was about 3 g/h of hydrated $TiO_2$, with a yield of 35% calculated on titanium.

Example 5

The same apparatus as used in example 1 was used to produce a $ZrO_2$ powder. Isopropylzirconate diluted to 52% with n-propyl alcohol was utilized as zirconium compound.

In a dry air stream, with a flowrate of 300 l/h (measured at room temperature), an isopropylzirconate aerosol was produced by means of a two-fluid nebulizer. The aerosol was then evaporated by externally heating the air stream. Before entering the ejector chamber the stream had a temperature of 135°C.

A second dry air stream with a flowrate of 590 l/h (measured at room temperature) was conveyed at 21°C into the ejector nozzle.

The temperature at which the aerosol formed in the ejector was about 59°C, while the Reynolds number in the ejector convergent portion was about 2,300.

In a third air stream with a flowrate of about 330 l/h (measured at room temperature), a distilled water aerosol was produced by means of a second two-fluid nebulizer. The aerosol was then evaporated by externally heating the air stream before its entering the hydrolysis chamber. This stream entered the apparatus at about 120°C.

In the hydrolysis chamber the contact time was about 41 seconds and the (moles of water)/(moles of isopropylzirconate) ratio was about 12.

The gaseous stream leaving the hydrolysis chamber was externally heated to about 130°C and the zirconium hydrated oxide was separated in 3 cyclones in series. The product, examined under the electron microscope, had the following particle size characteristics.

$D_n=0.26$ μm
$\delta=0.10$
$\delta/D_n=0.40$
$D_w/D_n=1.44$

The particles were perfectly spherical, water-dispersible and non-agglomerated.

The yield was approximately 30% calculated on zirconium.

The productivity was about 1 g/h of hydrated $ZrO_2$.

By calcining such product at 570°C in a static furnace, crystalline $ZrO_2$ oxide with unaltered particle size characteristics was obtained.

Example 6

The same apparatus as used in example 1 was utilized to produce a mix of aluminium and titanium hydrated oxides.

The starting organometallic compounds were a mixture consisting of 25% of aluminium sec. butoxide, 15% of isobutyl alcohol and 60% of isopropyltitanate.

The procedure described in example 5 was followed, except for the following.

The first gaseous stream (air+organometallic compounds) had a flowrate of 410 l/h (measured at room temperature) and a temperature of 133°C before entering the ejector.

The second gaseous stream (cold air) had a flowrate of 405 l/h (measured at room temperature) and a temperature of 14°C before entering the ejector nozzle.

The third gaseous stream (air+steam) had a flowrate of 330 l/h (measured at room temperature) and a temperature of about 120°C.

The temperature at which the aerosol formed in the ejector was about 70°C, while the Reynolds number in the ejector convergent portion was about 2,000.

The particle size characteristics of the powder obtained were the following:

$D_n=0.22$ μm
$\delta=0.08$
$\delta/D_n=0.36$
$D_w/D_n=1.9$

The yield was about 20% calculated on the two metals.

In the product the oxides were present in a $Al_2O_3/TiO_2$ weight ratio of about 1:4.

**Claims**

1. A process for preparing spherical, submicronic, mono-dispersed and non-agglomerated particles of metal oxides by reacting with steam a gaseous stream containing an aerosol of liquid particles of a hydrolyzable metal compound, characterized in that into a duct (1), in which an inert gas stream containing vapour of a hydrolyzable metal compound flows, there is fed, through a nozzle (2), a cold inert gas stream, the temperatures and flow-rates of the two gaseous streams being such as to establish in the duct a temperature lower than the condensation temperature of the metal compound, the mixed gaseous streams having a turbulent flow in the duct, with a Reynolds number equal to or higher than 1800; and in that at the duct outlet the aerosol of the metal compound liquid particles, which has formed in the duct, is reacted with steam, whereby there form solid particles of hydrated metal oxide, which are subsequently calcined to oxide.

2. A process as claimed in claim 1, characterized in that the inert gas stream containing vapour of a hydrolyzable metal compound is prepared by causing an aerosol of liquid particles of the metal compound to form in an inert gas stream, and then evaporating the aerosol.

3. A process as claimed in claim 1 or 2, characterized in that the hydrolyzable metal compound is a compound of titanium, aluminium, zirconium, chromium, vanadium, gallium or iron.

4. A process as claimed in claim 3, characterized in that the hydrolyzable metal compound is selected from isopropyltitanate, titanium ethoxide, titanium tetrachloride, aluminium sec.butoxide, aluminium ter.butoxide, aluminium n-butoxide, aluminium isobutoxide, isopropylzirconate and zirconium-n-propoxide.

5. A process as claimed in any of claims 1 to 4, characterized in that the inert gas stream containing vapour of a hydrolyzable metal compound is fed into the chamber (3) of an ejector (1), while the cold inert gas stream is fed into the ejector nozzle (2).

6. A process as claimed in any of claims 1 to 5, characterized in that, in the hydrolysis reaction, steam is used in an amount corresponding to 1.5—12 times the stoichiometric ratio with respect to the hydrolyzable metal compound.

7. A process as claimed in any of claims 1 to 6, characterized in that the hydrated metal oxide solid particles are separated from the gas stream prior to their calcination.

8. A process as claimed in any of claims 1 to 6, characterized in that the metal oxide solid particles are separated from the gas stream after their calcination.

9. Apparatus for preparing spherical, submicronic, mono-dispersed and non-aggregated particles of metal oxides, according to the process claimed in any of claims 1 to 8, characterized by comprising a convergent-divergent ejector (1) terminating in a cylindrical portion (8) which coaxially penetrates into the curved bottom portion (6) of a cylindrical chamber (5), the diameter of which is at least twice the diameter of the said cylindrical portion (8) of the ejector, the said curved bottom portion (6) of the cylindrical chamber being surmounted with an apertured plate (7), through which the end of the said cylindrical portion (8) of the ejector coaxially passes, an ejector nozzle (2) for receiving a cold inert gas stream feed, an ejector chamber (3) for receiving a feed of an inert gas stream (4) containing vapour of a hydrolyzable metal compound, and the said curved bottom portion (6) of the said cylindrical chamber being provided with one or more openings (9) for the inflow of steam, and down-stream of the said cylindrical chamber the apparatus including a device for separating the hydrated metal oxide from the gaseous stream and a furnace for calcining the hydrated oxide to oxide.

10. Apparatus as claimed in claim 9, characterized in that the ratio between the diameter of the said cylindrical chamber (5) and the diameter of the said cylindrical portion (8) of the ejector is from 2 to 15.

11. Apparatus as claimed in claim 10, characterized in that the furnace for calcining the hydrated oxide to oxide is arranged before the device for separating the metal oxide from the gaseous stream.

**Patentansprüche**

1. Verfahren zur Herstellung von kugelförmigen, submikroskopischen, monodispersen und nichtagglomerierten Metalloxid-Teilchen durch Umsetzen eines Gasstromes, der ein Aerosol von flüssigen Teilchen einer hydrolysierbaren Metallverbindung enthält, mit Wasserdampf, dadurch gekennzeichnet, daß man in eine Leitung (1), in der ein Inertgasstrom, welcher Dampf einer hydrolysierbaren Metallverbindung enthält, strömt, über eine Düse (2) einen kalten Inertgasstrom einleitet, wobei die Temperaturen und Strömungsgeschwindigkeiten der beiden Gasströme derart sind, daß in der Leitung eine Temperatur unter der Kondensationstemperatur der Metallverbindung herrscht, und wobei die gemischten Gasströme in der Leitung in turbulenter Strömung strömen, wobei die Reynolds-Zahl gleich oder höher als 1800 ist; und daß man am Leitungsauslaß das Aerosol der flüssigen Metallverbindungs-Teilchen, das sich in der Leitung gebildet hat, mit Wasserdampf umsetzt, wobei sich feste Teilchen von hydratisiertem Metalloxid bilden, die anschließend zum Oxid calciniert werden.

2. Verfahren nach Anspruch 1, dadurch gekennzeichnet, daß der Inertgasstrom, welcher Dampf einer hydrolysierbaren Metallverbindung enthält, dadurch hergestellt wird, daß man in einem Inertgasstrom die Bildung eines Aerosols von flüssigen Teilchen der Metallverbindung bewirkt und dann das Aerosol abdampft.

3. Verfahren nach Anspruch 1 oder 2, dadurch gekennzeichnet, daß die hydrolysierbare Metallverbindung eine Verbindung von Titan, Aluminium, Zirkonium, Chrom, Vanadium, Gallium oder Eisen ist.

4. Verfahren nach Anspruch 3, dadurch gekennzeichnet, daß die hydrolysierbare Metallverbindung ausgewählt ist unter Isopropyltitanat, Titanethoxid, Titantetrachlorid, Aluminium - sek - butoxid, Aluminium-tert-butoxid, Aluminium - n - butoxid, Aluminiumisobutoxid, Isopropylzirkonat und Zirkonium - n - propoxid.

5. Verfahren nach irgendeinem der Ansprüche 1 bis 4, dadurch gekennzeichnet, daß man den Inertgasstrom, welcher Dampf einer hydrolysierbaren Metallverbindung enthält, in die Kammer (3) eines Ejektors (1) einleitet während der kalte Inertgasstrom in die Ejektordüse (2) eingeleitet wird.

6. Verfahren nach irgendeinem der Ansprüche 1 bis 5, dadurch gekennzeichnet, daß in der Hydrolysereaktion Wasserdampf in einer Menge entsprechend dem 1,5 bis 12-fachen des stöchiometrischen Verhältnisses, bezogen auf die hydrolysierbare Metallverbindung, verwendet wird.

7. Verfahren nach irgendeinem der Ansprüche 1 bis 6, dadurch gekennzeichnet, daß die hydratisierten festen Metalloxid-Teilchen vor ihrer Calcinierung aus dem Gasstrom abgetrennt werden.

8. Verfahren nach iregendeinem der Ansprüche 1 bis 6, dadurch gekennzeichnet, daß die festen Metalloxid-Teilchen nach ihrer Calcinierung aus dem Gasstrom abgetrennt werden.

9. Vorrichtung zur Herstellung von kugelförmigen, submikroskopischen, monodispersen und nichtaggregierten Teilchen von Metalloxiden nach dem Verfahren irgendeines der Ansprüche 1 bis 8, gekennzeichnet durch einen konvergentdivergenten Ejektor (1), der in einen zylindrischen Bereich (8) endet, welcher koaxial in den gekrümmten Bodenbereich (6) einer zylindrischen Kammer (5) eindringt, deren Durchmesser mindestens das Doppelte des Durchmessers des zylindrischen Bereichs (8) des Ejektors beträgt, wobei über dem gekrümmten Bodenbereich (6) der zylindrischen Kammer eine Lochplatte (7) angeordnet ist, durch die das Ende des zylindrischen Bereichs (8) des Ejektors koaxial tritt, eine Ejektordüse (2) zur Aufnahme eines kalten Inertgasstromes, eine Ejektorkammer (3) zur Aufnahme eines Inertgasstromes (4), der Dampf einer hydrolysierbarten Metallverbindung enthält, wobei der gekrümmte Bodenbereich (6) der zylindrischen Kammer mit einer oder mehreren Öffnungen (9) zum Einströmen von Wasserdampf versehen ist, und wobei die Vorrichtung stromabwärts zu der zylindrischen Kammer eine Einrichtung zum Abtrennen von hydratisiertem Metalloxid aus dem Gasstrom und einen Ofen zum Calcinieren des hydratisierten Oxids zum Oxid aufweist.

10. Vorrichtung nach Anspruch 9, dadurch gekennzeichnet, daß das Verhältnis zwischen dem Durchmesser der zylindrischen Kammer (5) und dem Durchmesser des zylindrischen Bereichs (8) des Ejektors 2 bis 15 beträgt.

11. Vorrichtung nach Anspruch 10, dadurch gekennzeichnet, daß der Ofen zum Calcinieren des hydratisierten Oxids zum Oxid vor der Einrichtung zum Abtrennen des Metalloxids aus dem Gasstrom angeordnet ist.

## Revendications

1. Un procédé de préparation de particules sphériques, sub-microniques mono-dispersées et non aglomérées d'oxydes métalliques par réaction avec de la vapeur d'eau d'un courant gazeux contenant un aérosol de particules liquides d'un composé métallique hydrolysable, caractérisé en ce que l'on introduit dans un conduit (1), dans lequel s'écoule un courant de gaz inerte contenant une vapeur d'un composé métallique hydrolysable, par une buse d'injection (2) un courant de gaz inerte froid, les températures et débits des deux courants gazeux étant tels que dans le conduit la température soit maintenue inférieure à la température de condensation du composé métallique et que le mélange des courants gazeux s'écoule selon un débit turbulent correspondant à un nombre de Reynolds égal ou supérieur à 1 800, et en ce que à la sortie du conduit précité l'aérosol de particules liquides du composé métallique, qui s'est formé dans le conduit, régi avec de la vapeur d'eau, pour que se forme des particules solides d'oxyde métallique hydraté que l'on calcine ultérieurement en oxyde.

2. Un procédé ainsi que revendiqué dans la revendication 1, caractérisé en ce que le courant de gaz inerte contenant de la vapeur d'un composé métallique liquide hydrolysable est préparé par formation d'un aérosol de particules liquides du composé métallique dans le courant de gaz inerte puis par évaporation de l'aérosol.

3. Un procédé ainsi que revendiqué dans la revendication 1 ou 2, caractérisé en ce que le composé métallique hydrolysable est un composé du titane, de l'aluminium, du zirconium, du chrome, du vanadium, du gallium ou du fer.

4. Un procédé ainsi que revendiqué dans la revendication 1, caractérisé en ce que le composé métallique hydrolysable est un composé choisi dans le groupe comprenant isopropyltitanate, ethoxyde de titane, tetrachlorure de titane, sec-.butoxyde d'aluminium, ter.butoxyde d'aluminium, n-butoxyde d'aluminium isobutoxyde d'aluminium, isopropylzirconiate et n-propoxyde de zirconium.

5. Un procédé ainsi que revendiqué dans une quelconque des revendications 1 à 4, caractérisé en ce que le courant de gaz inerte contenant la vapeur d'un composé métallique hydrolysable est introduit dans la chambre (3) d'une tuyère (1) tandis que le courant de gaz inerte froid est introduit dans la buse d'injection (2).

6. Un procédé ainsi que revendiqué dans une quelconque des revendications 1 à 5, caractérisé en ce que, dans la réaction d'hydrolyse la vapeur est utilisé en une quantité telle que le rapport stoechiometrique soit de 1,5 à 12 par rapport au composé métallique hydrolysable.

7. Un procédé ainsi que revendiqué dans une quelconque des revendications 1 à 6, caractérisé en ce que les particules solides d'oxyde métallique hydraté sont séparées du courant gazeux préalablement à leur calcination.

8. Un procédé ainsi que revendiqué dans une quelconque des revendications 1 à 6, caractérisé en ce que les particules solides d'oxyde métallique sont séparées du courant gazeux postérieurement à la calcination.

9. Un appareil pour la préparation de particules sphériques, sub-microniques mono-dispersées et non aglomérées d'oxydes métalliques, conformément au procédé selon une quelconque des revendications 1 à 8, caractérisé en ce qu'il comprend:

—une tuyère convergente-divergente (1) se terminant par une partie cylindrique (8) qui pénètre dans une partie de cuve arrondie (6) d'une chambre cylindrique (5), selon l'axe de cette chambre, ladite portion de cuve arrondie (6) de la chambre cylindrique étant munie dans sa partie haute d'une plaque perforée (7) que l'extrémité de ladite partie (8) de la tuyère traverse coaxialement,

—une buse d'injection (2) pour introduire un courant gazeux inerte froid,

—une chambre d'injection (3) pour recevoir du courant gazeux inerte (4) contenant la vapeur d'un composé métallique hydrolysable, la partie de cuve arrondie (6) de ladite chambre cylindrique étant pourvue d'un ou plusieurs orifices (9) pour l'alimentation de vapeur, ledit appareil comportant en aval de ladite chambre cylindrique un dispositif de séparation de l'oxyde métallique hydraté et un four pour calciner l'oxyde hydraté en oxyde.

10. Un appareil ainsi que revendiqué dans la revendication 9, caractérisé en ce que le rapport du diamètre de ladite chambre cylindrique (5) et du diamètre de ladite partie cylindrique (8) de la tuyère est compris entre 2 et 15.

11. Un appareil ainsi que revendiqué dans la revendication 10, caractérisé en ce que le four pour calciner l'oxyde hydraté en oxyde est disposé en amont du dispositif de séparation de l'oxyde métallique du courant gazeux.